# EUROPEAN PATENT APPLICATION

(11) **EP 1 508 778 A1**
(43) Date of publication of application: **23.02.2005**
(21) Application number: 04019826.9
(22) Date of filing: 20.08.2004
(51) Int. Cl.: G01C 21/34

(54) **A server device, an in-vehicle terminal device, and program of communication-based car navigation system**

(30) Priority: 21.08.2003 JP 2003297207
(71) Applicant: Hitachi, Ltd., Chiyoda-ku, Tokyo (JP)
(72) Inventor: Atarashi, Yoshitaka c/o Hitachi, Ltd., Chiyoda-ku Tokyo 100-8220 (JP)
(74) Representative: Beetz & Partner Patentanwälte

(57) **Abstract**

The invention relates to a communication-based navigation system, wherein even when a vehicle deviates from an original guidance route, an in-vehicle terminal device (1) can locate a new guidance route and display the same without receiving another guidance route delivered from a server device (4). Immediately after searching for a guidance route which is displayed at the start of running, the server device (4) finds data on the shortest route from each node to a destination (direction data (423) to return to the original route) in accordance with a shortest path algorithm, and delivers this data to the in-vehicle terminal device (1) together with delivery map data (424) including the guidance route. When the vehicle deviates from the guidance route, the in-vehicle terminal device (1) locates a new guidance route or a return route from the location at which the vehicle deviates based on the direction data (423) to return to the original route, and displays the guidance route or return route.

## Description

### BACKGROUND OF THE INVENTION

The present invention relates to a GPS (Global Positioning System) based car navigation system, and more particularly, to a server device, an in-vehicle terminal device and associated programs of a communication-based car navigation system for communicating data between the in-vehicle terminal device and server device through a public communication network.

In recent years, with an increasingly reduced communication cost and improved communication speed, a communication-based car navigation system has drawn attention. In the communication-based car navigation system, map data on a nation-wide area is preserved in a server device, such that the server device locates a guidance route in response to a request from an in-vehicle terminal device, and delivers map data including the located guidance route and a surrounding area to the in-vehicle terminal device. Therefore, a large capacity storage device such as DVD (Digital Versatile Disk) for preserving nation-wide map data is indispensable for the in-vehicle terminal device. On the other hand, the in-vehicle terminal device need not execute a guidance route search process and so on, thereby largely reducing a processing load on the processor of the in-vehicle terminal device. As a result, the cost of the in-vehicle terminal device can be reduced.

On the other hand, the communication-based car navigation system implies the following disadvantages in a process after a re-search for a guidance route (hereinafter, the "re-search for a guidance route" is called "reroute") which is performed when a guided vehicle deviates from a guidance route.

When a guided vehicle deviates from a guidance route, the car navigation system must reroute to notify the user of a new guidance route or a route for returning to the original guidance route. Therefore, in the communication-based navigation system, the server device reroutes and delivers the result to the in-vehicle terminal device. However, the delivery is not always be ensured with stability because of the existence of a communication instable area, a communication unavailable area, and the like which can be encountered by a running vehicle. In addition, an extra communication cost is entailed due to repeated deliveries. Even if such a communication instable or communication unavailable condition lasts only for a short time period, this will impress the user as poor usability of the communication-based navigation system.

Attempts to overcome the foregoing disadvantage have already been under way. For example, JP-A-2002-107169 (Paragraph Numbers 0054 - 0105, and Figs. 22 to 41) discloses a communication -based navigation system which reduces the amount of communications associated with rerouting by transmitting only differences in map data, or by roughening information represented on a map, and the like. Since a reduction in the amount of communications results in a shorter communication time, the communication is improved in stability, and the communication cost is reduced as well.

JP-A-2001-147132 (Paragraph Numbers 0025 - 0099, and Figs. 1 to 7) discloses a communication-based route guiding system which divides guidance route information to previously locate communication unavailable areas such as a tunnel and the like, thereby avoiding communications in the communication unavailable areas.

Further, JP-A-2001-147132 and JP-A-2003-075180 (Paragraph Numbers 0118 - 0159, and Figs. 4 to 8) disclose that when reroute information cannot be delivered to an in-vehicle terminal device due to disabled communications or the like, the in-vehicle terminal device locates by itself a route for returning to an original guidance route, and displays this route. Also, JP-A-2002-139336 (Paragraph Numbers 0044 - 0069, and Figs. 2 to 6) discloses a navigation apparatus which previously locates a second and a third route corresponding to guidance routes other than an optimal guidance route, and displays these routes to permit the user to select a route with a higher degree of freedom, and to avoid rerouting during running.

However, in either JP-A-2001-147132 or JP-A-2001-147132, communications are made between the server device and in-vehicle terminal device during rerouting. Therefore, these prior art techniques fail to provide sufficient solutions either for the problem of instable communications during running or for the problem of increased communication cost.

Also, in JP-A-2001-147132 or JP-A-2003-075180, a guidance route located by the in-vehicle terminal device alone is not so accurate in the sense of an optimal route, but is such a route that can barely return the vehicle to the original route anyhow. Further, the second and third routes located by the navigation apparatus disclosed in JP-A-2002-139336 are less than optimal routes from a starting point but not optimal routes from a location from which the vehicle has deviated from a guidance route.

### SUMMARY OF THE INVENTION

It is therefore an object of the present invention to radically solve the problem of instable communications during running of a vehicle and the problem of increased communication cost associated with the rerouting, and to provide a server device, an in-vehicle terminal device, and associated methods and programs of a communication-based vehicle navigation system which enables the in-vehicle terminal device to locate by itself an optimal guidance route for rerouting.

This object is achieved by the independent claims. The dependent claims refer to preferred embodiments of the invention.

To achieve the above object, the present invention eliminates the need for making communications between the server device and in-vehicle terminal device even if the vehicle deviates from a guidance route.

For this purpose, the server device may include means (program) for extracting a map near the guidance route, searching the shortest route to a destination for navigable road links included in the extracted map, and/or creating direction data to return to the original route, in addition to guidance route search means (program) for finding data on the guidance route from a current position to the destination. Then, immediately after locating a route to which the vehicle should be guided, the server device may create direction data to return to the original route, and deliver this data associated with or incorporated in map data including guidance route data to the in-vehicle terminal device.

On the other hand, the in-vehicle terminal device may include means (program) for locating a return route for rerouting based on the direction data to return to the original route delivered from the server device, and/or means (program) for displaying the return route. Then, when the vehicle deviates from the guidance route in the middle of running, the in-vehicle terminal device may locate by itself a return route for rerouting based on the direction data to return to the original route, and display the return route.

According to the present invention, when the vehicle deviates from the guidance route, the in-vehicle terminal device has already received the delivered direction data to return to the original route based on the shortest path algorithm, so that the in-vehicle terminal device can locate a return route to the destination or to the original guidance route based on the previously delivered direction data to return to the original route. The in-vehicle terminal device may display the return route, even without receiving any new information delivered from the server device, if the vehicle actually deviates from the guidance route. Therefore, whenever the vehicle deviates from the guidance route anywhere, no communications are required between the in-vehicle terminal device and server device. In other words, the present invention need not to be involved in the problem of instable communications in the middle of running, which has been conventionally regarded as a disadvantage of the communication-based car navigation system, and the problem of the communication cost required for the instable communications. It can be said that these problems have been solved by the present invention.

Also, since the direction data to return to the original route indicates the shortest route from each of road links near the original guidance route to the destination, the in-vehicle terminal device can display an optimal route to the destination wherever the vehicle deviates from the guidance route.

Other objects, features and advantages of the invention will become apparent from the following description of the embodiments of the invention taken in conjunction with the accompanying drawings.

### BRIEF DESCRIPTION OF THE DRAWINGS

Fig. 1 is a block diagram illustrating an exemplary configuration of an in-vehicle terminal device for use in a communication-based vehicle navigation system to which the present invention is applied;
Fig. 2 is a block diagram illustrating an exemplary configuration of a server device for use in the communication-based vehicle navigation system to which the present invention is applied;
Figs. 3A is a block diagram illustrating an exemplary configuration of software for use with the in-vehicle terminal device (client software);
Fig. 3B is a block diagram illustrating an exemplary configuration of software for use with the server device (server software);
Fig. 4 is a flow chart illustrating a guidance route search and return route search process in the server device;
Fig. 5 is a reference diagram for describing how the server device executes the guidance route search and return route search process;
Fig. 6 is a block diagram illustrating an exemplary data structure of delivery map data;
Fig. 7 is a table showing an exemplary structure of road data in detail in the delivery map data;
Fig. 8 is a diagram illustrating exemplary nodes, links and link costs in a road network for describing a shortest path algorithm;
Fig. 9 is a flow chart illustrating a shortest route search process based on a Dijkstra method;
Fig. 10 is a diagram illustrating the shortest route to a destination located by the Dijkstra method;
Fig. 11 is a table showing rules for setting components rij of a return direction matrix;
Fig. 12 is a diagram illustrating the return direction matrix (rᵢⱼ) found for the exemplary road network in Fig. 11;
Fig. 13 is a flow chart illustrating a flag data addition process;
Fig. 14 is a diagram illustrating an exemplary guidance route displayed on the in-vehicle terminal device at the start of running;
Fig. 15 is a diagram illustrating an example in which a returning direction is displayed together with the guidance route on the in-vehicle terminal device;
Fig. 16 is a flow chart illustrating an alternative route search process in the in-vehicle terminal device;
Fig. 17 is a diagram illustrating an exemplary alternative route displayed on the in-vehicle terminal device;
Fig. 18 is a flow chart illustrating a procedure for locating a return route to a guidance route in the in-vehicle terminal device;
Fig. 19 is a diagram illustrating an exemplary return route to the guidance route displayed on the in-vehicle terminal device; and
Fig. 20 is a diagram for additionally describing the same intersection ID.

### DETAILED DESCRIPTION OF THE INVENTION .

### <System Configuration>

In the following, one embodiment of the present invention will be described in detail with reference to the accompanying drawings as required.

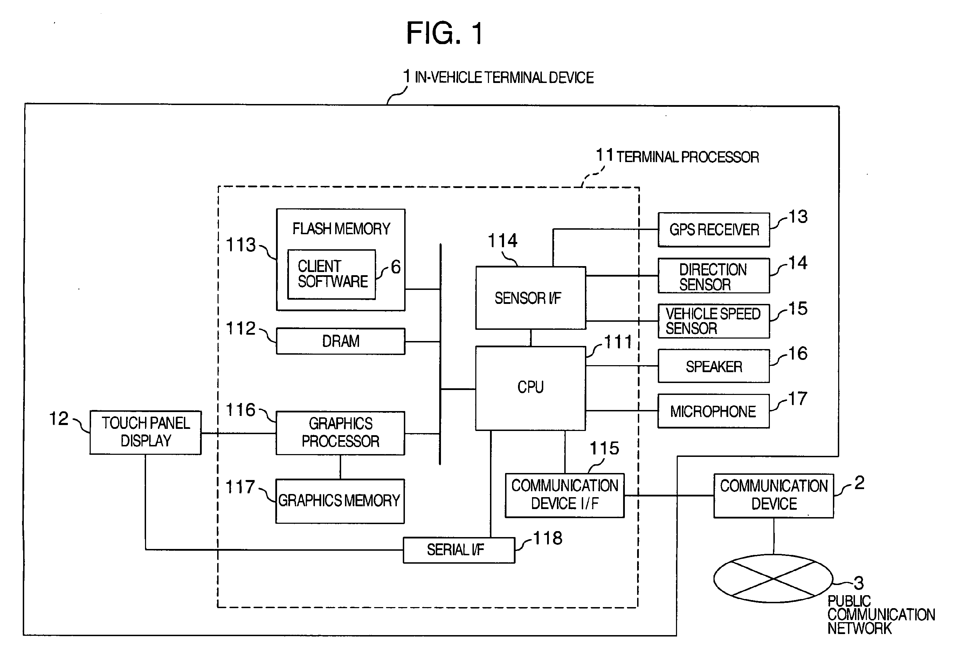

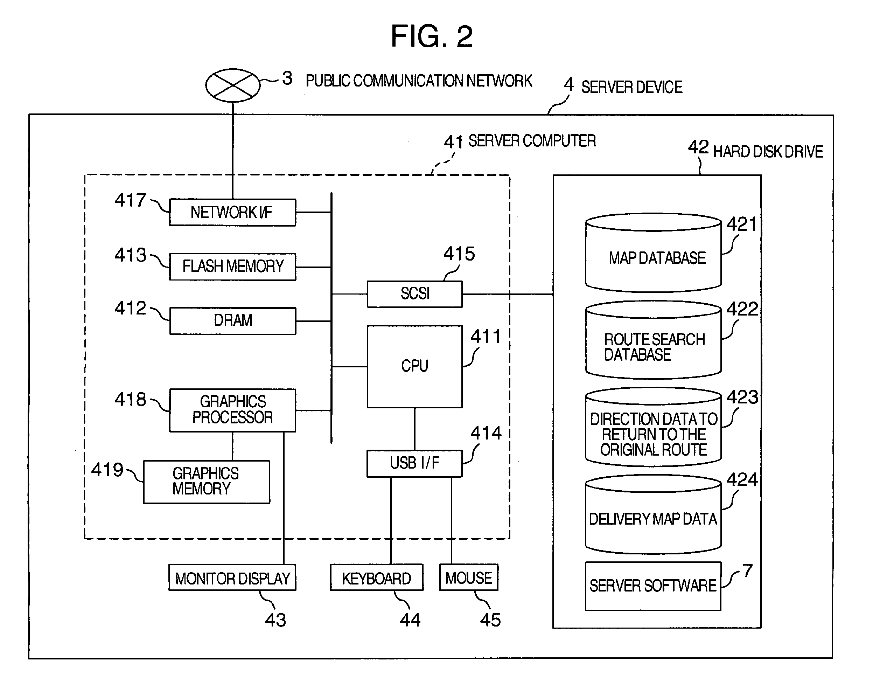

First, the configuration of a communication-based car navigation system, to which the present invention is applied, will be described with reference to Figs. 1 and 2. Fig. 1 is a block diagram illustrating an exemplary configuration of an in-vehicle terminal device 1 for use in the communication-based navigation system, and Fig. 2 is a block diagram illustrating an exemplary configuration of a server device 4 for use in the communication-based navigation system.

As illustrated in Figs. 1 and 2, the communication based car navigation system comprises an in-vehicle terminal device 1 which may be equipped in a vehicle that needs a route guidance; and a server device connected to the in-vehicle terminal device 1 through a communication device 2 and a public communication network 3. Here, the communication device 2 refers to a cell phone or the like, and the public communication network 3 includes a telephone line network and an Internet protocol network.

In Fig. 1, the in-vehicle terminal device 1 comprises a terminal processor 11 which serves as an information processing unit; a touch panel display 12 which provides both input and output functions, a GPS (Global Positioning System) receiver 13 for receiving radiowaves from satellites; a direction sensor 14 such as a gyroscope; a vehicle speed sensor 15 for inputting a rotational speed of wheels; a speaker 16, and a microphone 17. The components 12 - 17 are connected to the terminal processor 11. The terminal processor 11 comprises a CPU (Central Processing Unit) 111; a flash memory 113 for storing client software 6; a DRAM (Dynamic Random Access Memory) 112 for storing data delivered from the server device 4; a graphics processor 116 for controlling a display on the touch panel display 12; a graphics memory 117; a serial I/F (I/F is an abbreviation of interface. This abbreviation is used throughout this specification) 118; a sensor IF 114 for interfacing with the GPS receiver 13, direction sensor 14 and vehicle speed sensor 15; and a communication device IF 115 for interfacing with the communication device 2 such as a cell phone or the like. The components 112 to 118 are connected to the CPU 111.

In Fig. 2, the server device 4 comprises a server computer 41; a hard disk drive 42; a monitor display 43; a keyboard 44; and a mouse 45. The components 42 - 45 are connected to the server computer 41. The server computer 41 comprises a CPU 411; a flash memory 413 for storing so-called BIOS (Basic Input Out put System); a DRAM 412 for storing server software 7; a graphics processor 418 for controlling a display on a monitor display 43; a graphics memory 419; an SCSI (Small Computer System Interface) 415 for interfacing with the hard disk driver 42; a network I/F 417 for interfacing with the public communication network 3; a USB (Universal Serial Bus) I/F 414 for interfacing the keyboard 44 and mouse 45. The components 412 to 419 are connected to the CPU 411. The hard disk drive 42 preserves the server software 7 and a map database 421, and temporarily preserves a route search database 422, direction data 423 to return to the original route, delivery map data 424, and the like which are created as required.

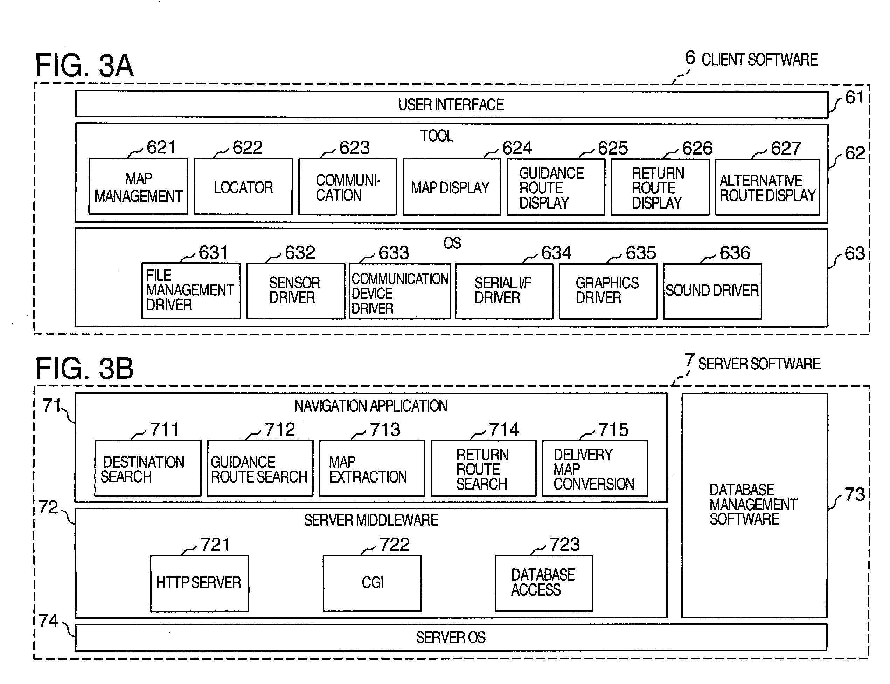

Figs. 3A and 3B are block diagrams illustrating exemplary configurations of the client software 6 and server software 7, respectively.

The client software 6 is a set of programs which are stored in the flash memory 113 of the terminal processor 11, and executed to implement a variety of functions of the terminal processor 11. The client software 6 is generally divided into a user interface 61, a tool 62, and an OS (Operating System) 63. Here, the tool 62 includes application programs such as a map management 621, a locator 622, a communication 623, a map display 624, a guidance route display 625, a return route display 626, an alternative route display 627, and the like for allowing the in-vehicle terminal processor 11 to function as a terminal of the communication-based navigation system. The OS 63 in turn includes drivers for controlling a variety of interfaces such as a file management driver 631, a sensor driver 632, a communication device driver 633, a serial I/F driver 634, a graphics driver 635, a sound driver 636, and the like.

The server software 7 generally comprises a navigation application 71, server middleware 72, database management software 73, and a server OS 74. Here, the navigation application 71 is an application program for allowing the server computer 41 to function as the server device 4 of the communication-based car navigation system, and includes programs such as destination search 711, guidance route search 712, map extraction 713, return route search 714, delivery map conversion 715, and the like. The server middleware 72 in turn is a program for facilitating description and operation of the respective programs included in the navigation application 71, and includes an HTTP (Hyper Text Transfer Protocol) server 71, a CGI (Common Gateway Interface) 722, database access 723, and the like.

### <Operation and Processing Specifics of Server Device>

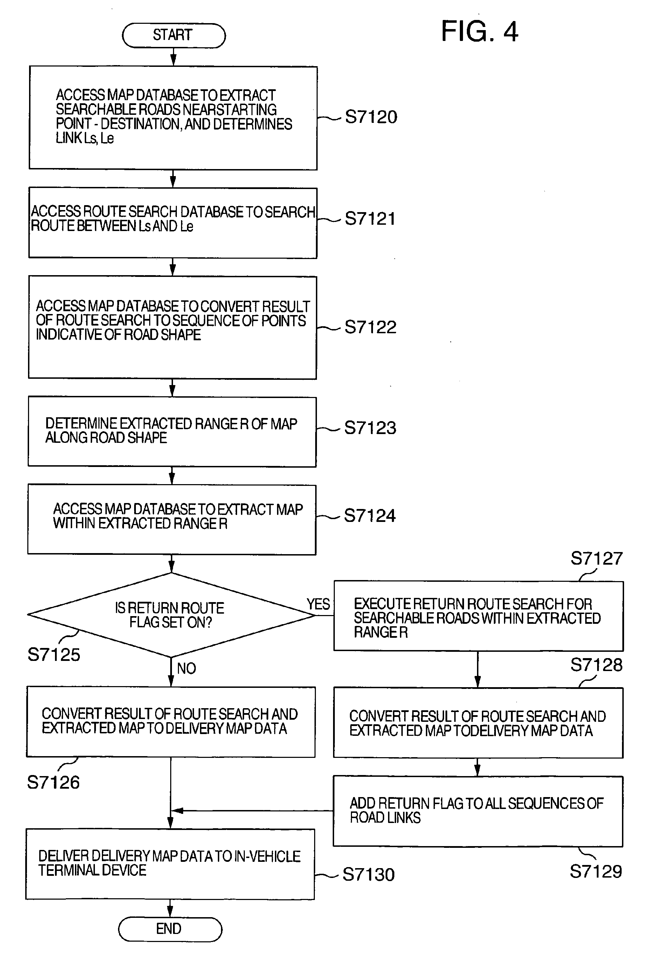

The operation and processing specifics of the server device 4 in the communication-based car navigation system will be described in detail with reference to Figs. 4 to 13. In the following description, the exemplary configuration of the server device 4 in Fig. 2 and the exemplary configuration of the server software 7 in Fig. 3 will be referred to as required.

In the communication-based car navigation system, at the start of running or driving of a vehicle, the user sets a destination in the in-vehicle terminal device 1 to locate a guidance route to the destination. For this purpose, the in-vehicle terminal device 1, upon power-on, acquires data on a current position, such as the latitude and longitude, and acquires conditions (for example, a time-priority shortest time route, a freeway-priority route, or the like) when it conducts a search for a destination and a guidance route entered through the touch panel display 12 or the like. Then, the in-vehicle terminal device 1 delivers data on the longitude and latitude of the starting point, the longitude and latitude of the destination, and the search conditions to the server device 4 in the form of a CGI parameter table. Here, the CGI parameter table includes a return route flag (reroute flag). When this return route flag is set on, the in-vehicle terminal device 1 requests the server device 4 for a return route. The data in such a CGI parameter table can be expressed as a URL format request from the in-vehicle terminal device 1 to the server device 4, and described, for example, in the following format: HTTP://servername/route.cgi?src=N35.40.39,E139.46.20&de st=N35.32.52,E139.47.28 & cond=time, freeway&reroute=on, where "src=N35.40.39,E139.46.20" represents the latitude and longitude of the starting point, "dest=N35.32.52,E139.47.28" represents the longitude and latitude of the destination, "cond=time, freeway" represents the search conditions, and "reroute=on" corresponds to the return route flag, and represents a request for a return route. Also, "time, freeway" in the search conditions represents time priority and freeway priority in the search condition.

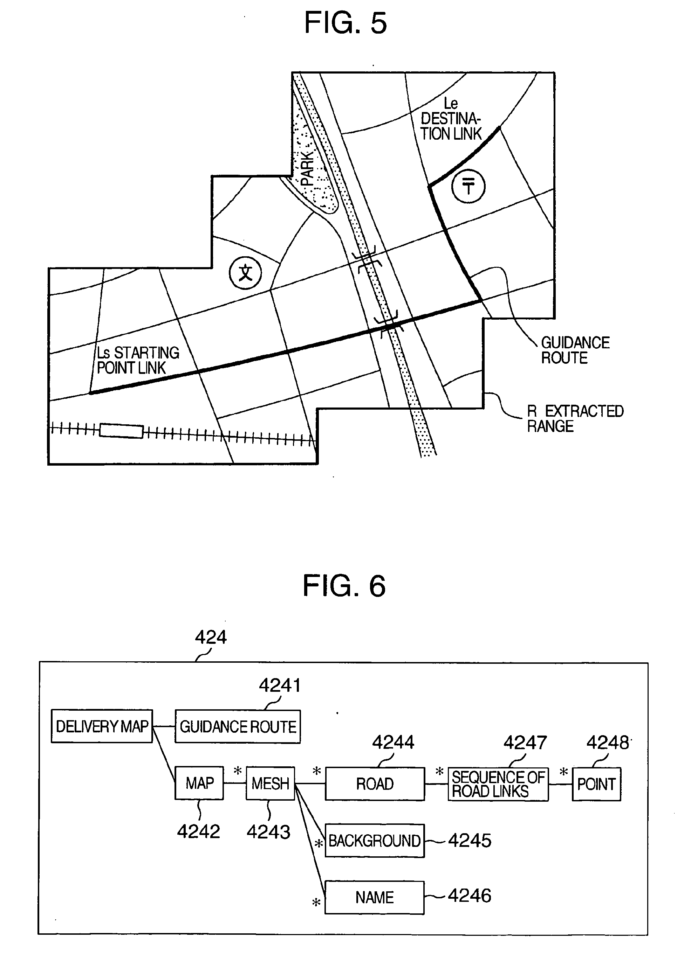

Fig. 4 is a flow chart illustrating a guidance route search and return route search process. Fig. 5 is a reference diagram for describing specifics of the process.

Upon receipt of the GCI parameter table delivered from the in-vehicle terminal device 1, the server device 4 starts a search for a guidance route from the current position to the destination. First, the server device 4 accesses the map database 421 based on the data on the longitude and latitude of the current position and destination, extracts searchable roads near the current position, i.e., the starting point and the destination, and determines a starting point link Ls and a destination link Le (S7120). Also, in this processing, the server device 4 creates the route search database 422. Here, the searchable roads refer to those roads which can form part of a guidance route, and do not include narrow service roads even if they appear on the map. The link, used herein, refers to a road sectioned by nodes, and the node refers to an intersection (note that actually, a node can be set even in the middle of a road).

Next, the server device 4 accesses the route search database 422 to search for routes from the starting point link Ls to the destination link Le, and extracts an optimal route from these routes as a guidance route (S7121). The optimal route, used herein, refers to a route which is optimal for conditions specified by the search conditions of the CGI parameter table. Then, the server device 4 accesses the map database 421 in accordance with the extracted guidance route, and converts the guidance route to a sequence of points representative of a road shape (S7122). Further, the server device 4 determines a map extraction range R along the sequence of points representative of the road shape of the guidance route (S7123), accesses the map database 421 to extract a map included in the extraction range R from the map database 421 (S7124). Fig. 5 illustrates an example of the map extraction range R and guidance route.

Next, the server device 4 checks the state of the return route flag in the CGI parameter table, and converts the guidance route resulting from the route search (S7121) and the extracted map to delivery map data 424 (S7126) when the return route flag is set off (No at S7125). Then, the delivery map data 424 is delivered to the in-vehicle terminal device 1.

On the other hand, when the return route flag is set on (Yes at S7125), the server device 4 executes a return route search for the searchable roads within the extracted range R (S7127). Then, the server device 4 converts the guidance route resulting from the route search (S7121) and the extracted map to the delivery map data 424 (S7128), and adds information on a return route resulting from the return route search (S7127) to the delivery map data 424 as return flag data appended to data on a sequence of road links (S7129). Then, the server device 4 delivers the delivery map data 424 with the return flag data added thereto to the in-vehicle terminal device 1.

Fig. 6 is a block diagram illustrating an exemplary data structure of the delivery map data 424. The delivery map data 424 comprises guidance route data 4241 and map data 4242. The map data 4242 comprises a plurality of mesh data 4243, and the mesh data 4243 is comprised of a plurality of road data 4244, a plurality of background data 4245, and a plurality of name data 4246. Further, the road data 4244 comprises a plurality of road link sequence data 4247, while the road link sequence data 4247 comprises a plurality of point data 4248. In Fig. 6, data marked with "*" indicates that there are a plurality of such data.

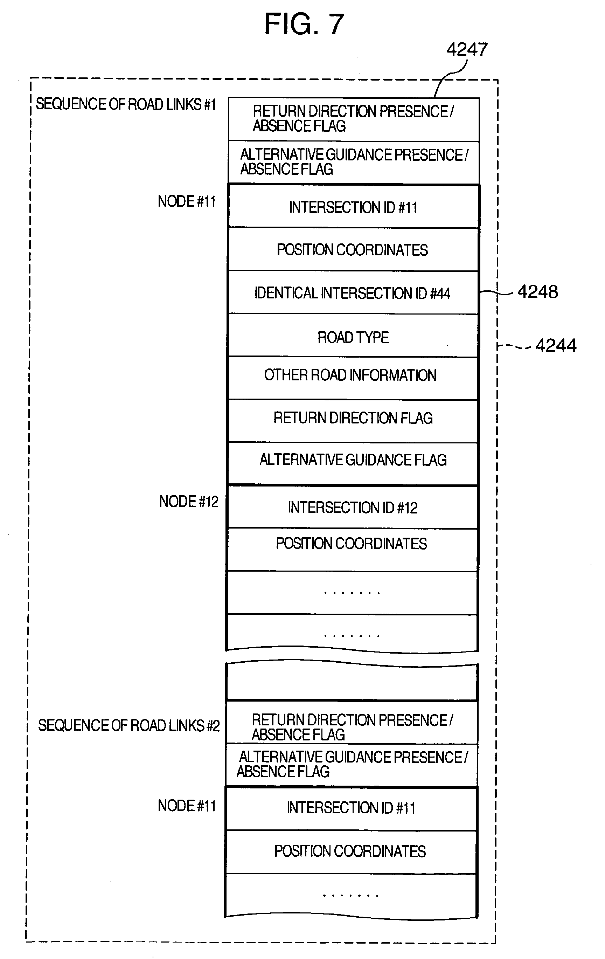

Fig. 7 is a table showing an exemplary structure of the road data 4244 in detail. The road data 4244 comprises a plurality of road link sequence data 4247, each of which is appended with a return direction presence/absence flag and an alternative guidance presence/absence flag, and includes point data 4248 arranged in a line. Here, the point data basically refers to data along position coordinates, and includes not only intersections but also points between intersections. However, for convenience of explanation, the point data refers to data associated with an intersection, and is hereinafter called the "node data." Therefore, the node data 4248, as shown in Fig. 7, includes an intersection ID, position coordinates, an identical intersection ID (which is an intersection ID assigned to an intersection when it is included in another road link sequence data), a road type (data such as Prefectural Road No. 2, Showa Street, or the like), other road information, a return direction flag, and an alternative guidance flag, arranged one after another. Here, the return direction presence/absence flag, alternative guidance presence/absence flag, return direction flag, and alternative guidance flag are added in return flag addition (S7129) in the processing flow of Fig. 4.

Next, the return route search (S7127) and return flag addition (S7129) in the processing flow of Fig. 4 will be described in greater detail.

It should be noted that the processing flow is switched depending on whether the return flag is set on or off in order for the server device 4 to have the ability to support conventional in-vehicle terminal devices. Specifically, since the return route flag will never be set on in a CGI parameter table delivered from a conventional in-vehicle terminal device (No at S7129), the return route search (S7127) and return flag addition (S7129) will not be executed for the conventional in-vehicle terminal device. These steps are executed when the return route flag is set on in the in-vehicle terminal device 1 of this embodiment, and the flag is delivered to the server device 4.

First, the return route search (S7127) will be described. This step is executed to locate a return route or an alternative route from searchable roads within an extracted map range which has been set corresponding to the previously determined guidance route. Here, the return route refers to a route from a location at which the vehicle has deviated from the original guidance route to the destination or to the original guidance route. The alternative route refers to an optimal route which reaches the destination within the guidance route. Here, the condition for "optimality" is determined by search conditions in the CGI table delivered from the in-vehicle terminal device 1.

The optimal route to the destination is located in accordance with a so-called shortest path algorithm. The shortest path algorithm builds a road network with nodes and links, defines a cost for each link, and locates a route which minimizes a total sum of the costs of links each connecting arbitrary two points. Therefore, a node corresponds to an intersection, and a link corresponds to a road which connects intersections. The link cost corresponds to the distance between intersections or a running time between intersections, and is determined by conditions for optimization.

In this embodiment, since the starting point and destination are regarded as links, they must be converted to nodes for applying the shortest path algorithm to this embodiment. Here, for simplicity, assume that a node close to the current position of the vehicle is selected.

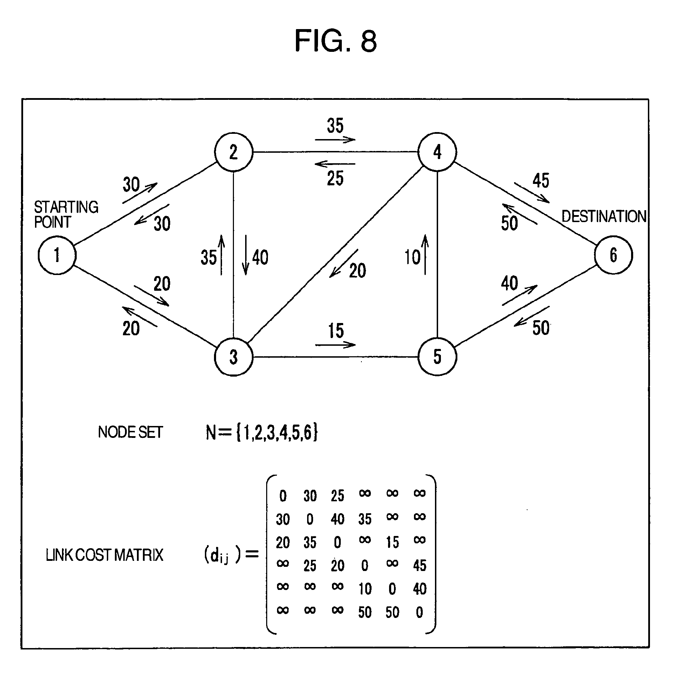

Fig. 8 is a diagram illustrating examples of nodes, links and link costs in a road network for explaining the shortest path algorithm. Here, a circular joint represents a node, with a node number inscribed in the circle. A line which connects nodes represents a link, and an arrow and a numeral written nearby represent a link cost when a vehicle runs in the direction indicated by the arrow. When a road is one-way traffic, the link cost is defined only in one direction, and the link cost in the undefined direction is infinity (∞), These link costs are represented in the form of a link cost matrix (dᵢⱼ), where dᵢⱼ is a link cost in a direction from node i to node j, and a link cost between nodes which are not connected is infinity (∞).

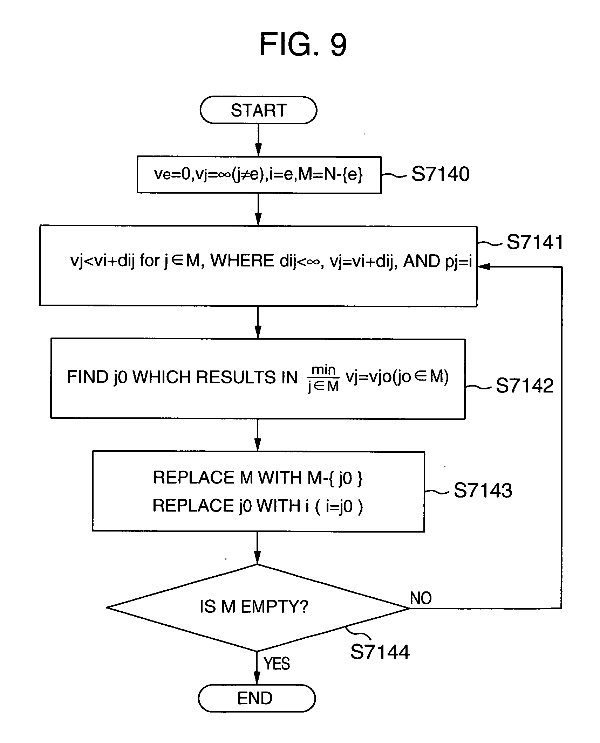

The most frequently used method in the shortest path algorithm is a Dijkstra method. Fig. 9 is a flow chart illustrating a shortest route search process based on the Dijkstra method. Generally, the shortest route search attempts to search for the shortest route from a starting point to a destination. In this embodiment, however, the destination, which has been set in the event of the route search, is regarded as the starting point of the process, and the shortest routes from the destination to all nodes are located from searchable roads within an extracted map range. In other words, the shortest routes to the destination are located for all the nodes.

Data given in the Dijkstra method in Fig. 9 is the link cost matrix (dᵢⱼ), and requested data are a set {pᵢ} of node numbers, and a set {vᵢ} of route costs, where pᵢ represents a node number of a next forward node on the shortest route from a node i to a destination node, and vi represents the sum of link costs on the shortest route from the node i to the destination node.

The following description on the processing flow in Fig. 9 will be made with a set of all nodes being represented by N, the number of all nodes by n, and a set of unprocessed nodes by M.

First, when the number of the destination is designated by e, vₑ=0, vⱼ=∞ (j=1, ..., n, j#e), M=N-[e], i=e are set for initial values (S7140).

Next, if vⱼ<vᵢ+dᵢⱼ for j∈M, where dij<∞, vⱼ=vᵢ+dᵢⱼ, and pⱼ=i (S7141). This means that a node j connected to a node i is located, the sum vⱼ of link costs up to the destination node previously located for the node j is compared with the sum vᵢ+dᵢⱼ of link costs for a route from the node j to the destination via the node i, and the shortest route to the node j is changed to that via the node i if the sum of the link costs for the route via the node i is smaller.

Next, link costs vⱼ are extracted for all nodes j included in the set M of unprocessed nodes, and the minimum link cost vj is found from among the extracted link costs vj, and j at that time is designated by j0 (S7142). Then, the node j0 is removed from the set M of unprocessed nodes to define a new set M of unprocessed nodes, and j0 is replaced with the node i which is referenced when step S7141 is executed (i=j0) (S7143).

Steps S7141 to 7143 are repeated until the set M of unprocessed nodes becomes empty, and finally found pᵢ and vᵢ (j=1, ..., n, j#e) provide the set {pᵢ} of shortest route nodes and the set {vi} of the shortest route costs found by the Dijkstra method.

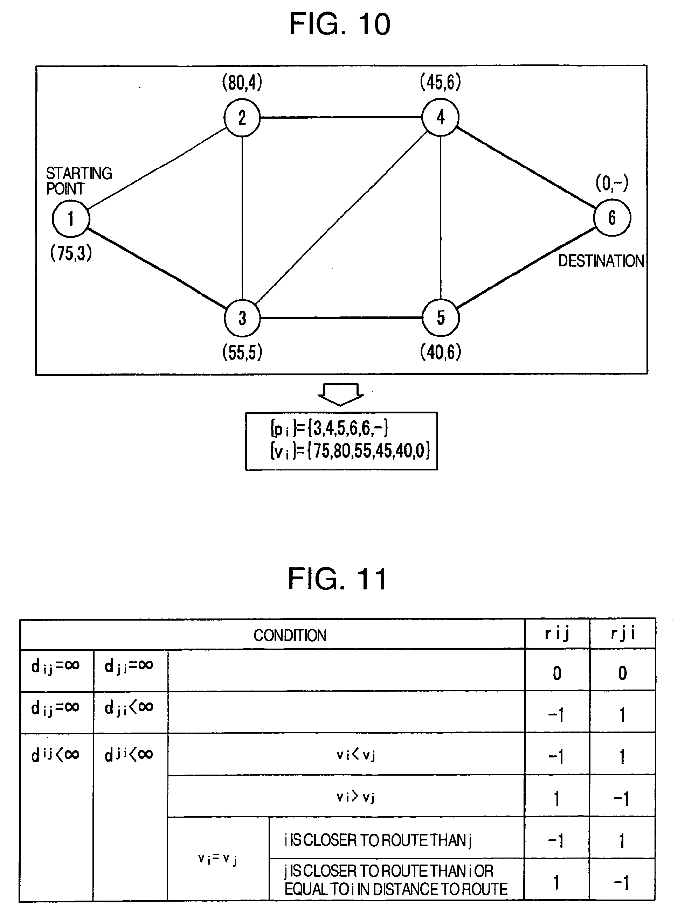

Fig. 10 is a diagram illustrating the shortest route (indicated by bold lines) to the destination located by the Dijkstra method for the example of road network in Fig. 8. Here, numerals written in parenthesis near each node indicate pᵢ and vᵢ found for each node, respectively, in the form of (vᵢ, pᵢ)- {Pᵢ} and {vᵢ} are also shown outside the frame. Since pᵢ indicates the number of a next forward node on the shortest route from a node i to a destination node, the destination can be reached by following these numbers. For reference, in this example, since p₂=4, the shortest route from the node 2 to the destination directs to a node 4, and since p₄=6, this route reaches the destination node, as can be seen in Fig. 10. In other words, the shortest routes to the destination can be located for all nodes by the Dijkstra method.

Therefore, with the set {pi} of shortest route nodes and the set {vi} of shortest route costs available, even if the vehicle deviates from the original guidance route anywhere on the road network, a route which reaches the destination node can be indicated, if only the vehicle goes to the nearest node from the current position. However, in the event of a deviation from the guidance route, if a route on which the vehicle is running is not included in the guidance route located by the dijkstra method, for example, if the vehicle deviates to a road from the node 1 to the node 2 in the example of Fig. 10, the driver cannot immediately determine whether he should go forward or turn back. Thus, for allowing the driver to intuitively make this determination, the return direction matrix (rij) is introduced. rij indicates the direction in which the vehicle should go to a node i or a node j when the vehicle has deviated to a link ij. When the direction in which the vehicle should go is the same as the direction of the link ij (from the node i to node j), rᵢⱼ=1 is defined, and rᵢⱼ=-1 is defined when in the reverse direction. The traveling direction determined for each link in the return direction matrix is called the "recommended course."

Fig. 11 is a table which shows rules for setting the component rij of the return direction matrix. Though the rules conform to the aforementioned definition, the basic concept of the setting is that for a link ij which connects a link i with a link j, rᵢⱼ=-1 and rⱼᵢ=1 are set when vᵢ<vⱼ. Specifically, when the sum vi of link costs to the destination of the node i is smaller than the sum vⱼ of link costs to the destination of the node j, a travel from the node j to the node i will results in a selection of the optimal route. Also, when dᵢⱼ=∞ and dⱼᵢ=∞, there is no link between the node i and node j, so that rᵢⱼ=rⱼᵢ=0, as a matter of course. Also, when a link exists only in one direction, i.e., dᵢⱼ=∞ and dⱼᵢ<∞, rᵢⱼ=-1, and rⱼᵢ=1 are defined irrespective of the values of vi, vj. Further, when vi=vj, there is no difference irrespective of in which direction to take, so that rᵢⱼ=1 is defined when the link ij directs closer to the original guidance route, and rᵢⱼ=-1 is defined when the link ij directs away from the original guidance route. Though not shown, a link which starts from and end at the same node is defined as rᵢᵢ=0.

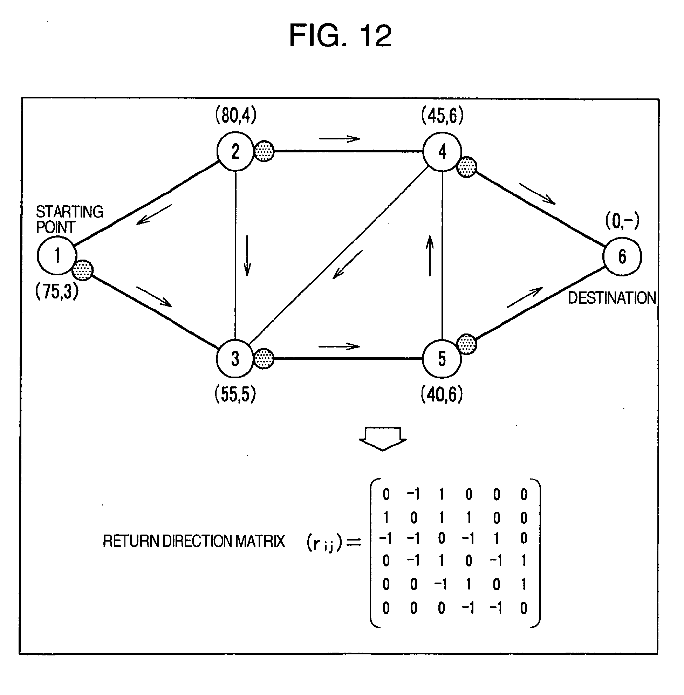

Fig. 12 shows a return direction matrix (rᵢⱼ) found for the example of the road network in Fig. 8. An arrow added to each link in Fig. 12 indicates the direction of a recommended course corresponding to rij. In other words, if the vehicle travels along the arrows, the vehicle can reach the destination wherever the vehicle deviates from a guidance route on a map delivered together with the guidance route. A black circle added to each node except for the destination indicates that the associated link is a link ipi by {Pi} found by the Dijkstra method. In other words, if the vehicle follows the links accompanied with the black circles, the vehicle can reach the destination along the optimal route from that node.

As will be understood from the foregoing description, a return route or an alternative route can be located if the set {Pᵢ} of shortest route nodes and the return direction matrix (rᵢⱼ) are available. Therefore, if only the server device 4 delivers these data together with the delivery map data 424 including a guidance route to the in-vehicle terminal device at the time the vehicle starts running, i.e., starts driving, the in-vehicle terminal device 1 can locate a return route and an alternative route using the set {Pᵢ} of shortest route nodes and the return direction matrix (rᵢⱼ), wherever the vehicle deviates from the guidance route. Thus, the set {Pᵢ} of shortest route nodes and the return direction matrix (rᵢⱼ) are collectively called the "direction data 423 to return to the original route."

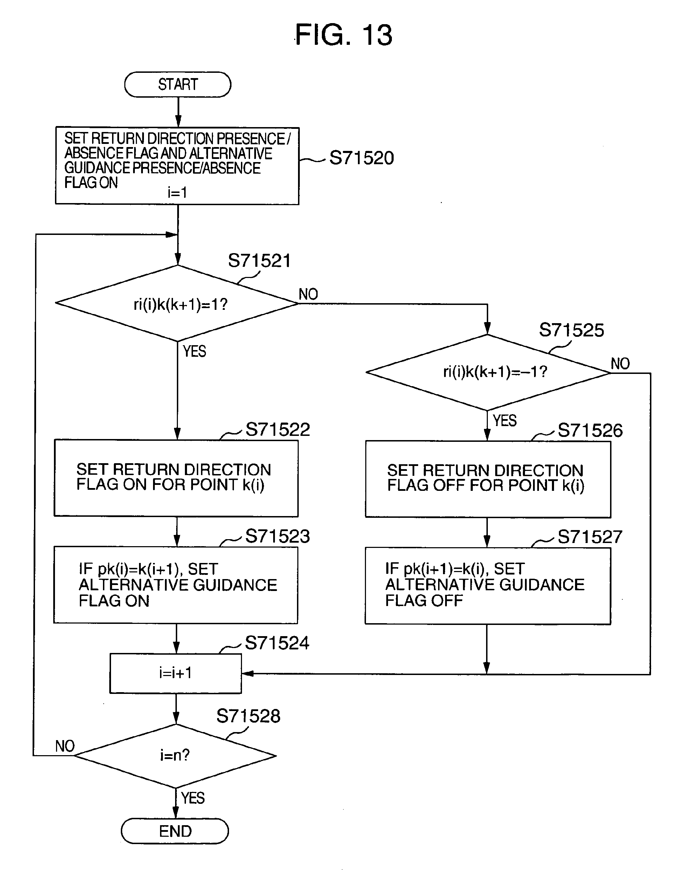

Fig. 13 is a flow chart illustrating a flag data addition process in the return flag addition at S7129. The flag data addition process adds flag data to the road link sequence data 4247 in the delivery map data 424 based on the direction data 423 to return to the original route. Therefore, data entered for this process includes the set {Pᵢ} of shortest route nodes, the return direction matrix (rᵢⱼ), and the road link sequence data 4247 in Fig. 7 except for the return direction presence/absence flag, alternative guidance presence/absence flag, return direction flag, and alternative guidance flag. The flag data addition process illustrated in Fig. 13 creates and adds these flag data.

The flow of the flag addition process illustrated in Fig. 13 involves extracting one road link sequence data 4247, and adds flags to the extracted road link sequence data 4247. Since there are a plurality of road link sequence data 4247 in general, this process is executed a plurality of times for adding the flags to all the road link sequence data 4247.

First, as pre-processing, an intersection ID is extracted from each node data of a road link which is to be processed, and is converted to a node number when {pᵢ} and (rᵢⱼ) are found. The converted node numbers are designated k(1), k(2), ..., k(n) in order. Then, the return direction presence/absence flag and alternative guidance presence/absence flag appended to each road link in the road link sequence data 4247 are set on to indicate that this road link has been set the return direction presence/absence flag and alternative guidance presence/absence flag. In addition, a counter is initialized to i=1 (S71520).

Next, if rₖ(i)ₖ(i+1)=1 for given i (Yes at S71521), the return direction flag for an intersection k(i) is set on (S71522). In addition, if pₖ(i)=k(i+1), the alternative guidance flag is also set on. On the other hand, if rₖ(i)ₖ(i+1)=-1 (Yes at S71525), the return direction flag for the intersection k(i) is set off (S71526). In addition, if pₖ(i+1)=k(i), the alternative guidance flag is also set off (S71527).

Next, the counter is incremented by one (S71524), and the processing at steps S71521 to S71528 is repeated until i is equal to n (S71628). This processing sets to each node, the return direction flag indicating whether or not the node can be the starting point of a recommended course, and the alternative guidance flag indicating whether or not a certain node can be the starting point of an alternative route in a link including that node (whether the black circle is added in Fig. 7).

The foregoing process adds the return direction presence/absence flag and alternative guidance presence/absence flag, as well as the return direction flag and alternative guidance flag,s to each road link sequence data 4147, and the resulting data is delivered to the in-vehicle terminal device 1 as the delivery map data 424. Therefore, the in-vehicle terminal device 1 displays a return direction and an alternative guidance route with reference to these flags.

### <Operation and Processing Specifics of In-Vehicle Terminal Device>

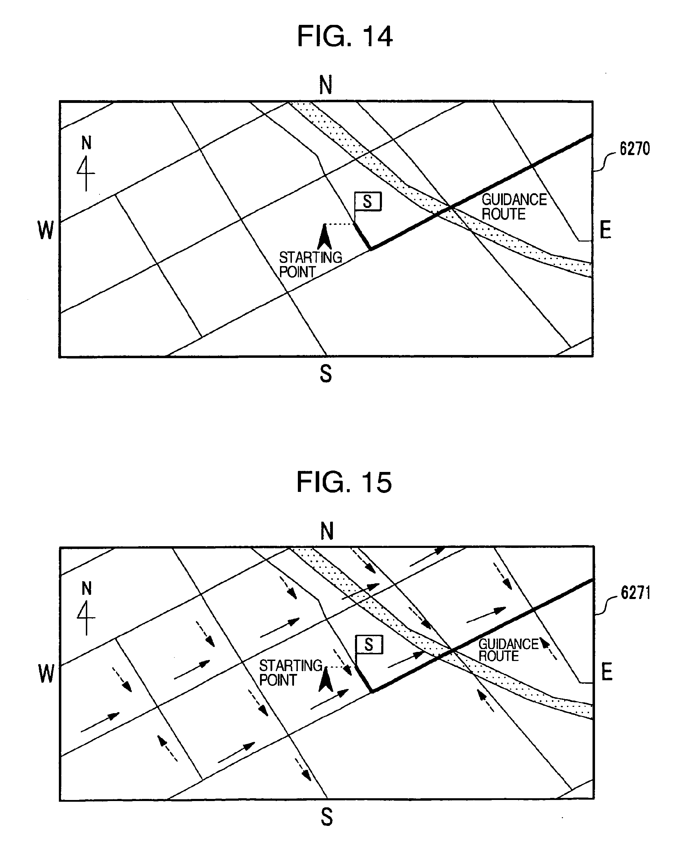

In the following, the operation and processing specifics of the in-vehicle terminal device 1 in the communication-based car navigation system will be described in detail with reference to Figs. 14 to 20.

Fig. 14 illustrates an exemplary guidance route displayed on the in-vehicle terminal device 1 at the start of running.

The in-vehicle terminal device 1 receives the delivery map data 424, having the return direction flag and alternative guidance flag added thereto, delivered from the server device 4 described above, at the start of running. Based on this data, the in-vehicle terminal device 1 can display a map including a current position (starting point) and a guidance route, as illustrated in Fig. 14.

In the exemplary display of Fig. 14, the starting point is not present on a link of a navigable road, and therefore is estimated that it is present on a narrow alley or a side road or in a wide parking lot. In this event, the link closest from the current position, from which the vehicle starts, is selected for a starting point link. Here, a road of a north-east link adjacent to the starting point is selected. Then, the guidance route from that link to the destination is displayed, for example, in bold lines.

Fig. 15 illustrates an exemplary image which displays a return direction together with the guidance route on the in-vehicle terminal device 1. Here, solid line arrows indicate return directions by alternative guidance flags, while broken line arrows indicate return directions by the return direction flags. The arrows may be displayed on associated roads instead of along the roads, and the solid line arrows may be distinguished from the broken line arrows by different colors.

A deviation of the vehicle from the guidance route is not always limited to during running. When the starting point does not appear on a navigable road as illustrated in Fig. 14, this can be regarded as a deviation. In such an event, displaying a return direction is very convenient for the driver. For reference, even if the vehicle at the starting point attempts to go out to the road of the north-east link, which is a guidance starting point of the guidance route that has been set as a result of a route search, the vehicle cannot help going to another link to which an exit is actually provided, for example, a road of a north-west link, if there is actually no exit to that road. In this event, since a return direction is displayed for the north-west link, the driver can readily determine where to travel for returning to the original guidance route. Also, when the vehicle travels along the solid line arrows, the vehicle can reach the destination in accordance with the optimal route. In this way, by displaying the return directions not only for roads directing from the current position to the guidance route but also for roads surrounding the current position, the driver can readily determine and select a route to the guidance route.

At this time, the in-vehicle terminal device 1 has received the delivery map data 424 having the return direction flags and alternative guidance flags added thereto, so that the in-vehicle terminal device 1 can locate a return direction and displays the return direction together with the map. Also, during running, even if the vehicle deviates from the guidance route, similar return directions can be displayed on the in-vehicle terminal device 1, thus allowing the driver to reach the destination or the original guidance route following an appropriate route, without going astray. Moreover, in this event, the in-vehicle terminal device 1 need not communicate with the server device 4.

The return direction flags are displayed in the following manner. In the road link sequence data 4247 of Fig. 7, the node data 4248 is extracted for referencing the return direction flag and alternative guidance flag included therein. If the alternative guidance flag is set on, solid line arrows are displayed in the direction of an associated sequence of road links. Conversely, if the alternative guidance flag is set off, broken line arrows are displayed in the direction of the sequence of road links when the return direction flag is set on. When the return direction flag is set off, broken line arrows are displayed in the opposite direction to the sequence of road links. Here, the direction of the road link sequence data refers to the direction of a sequence of links made up of a series of nodes indicated by intersection IDs.

Here, supplementary description will be made on a deviation of the vehicle from the guidance route during running.

When the vehicle deviates from the guidance route during running, an alarming message is generated to announce "the vehicle has deviated from the guidance route," and then, a travelling direction is presented to the driver for returning to the original guidance route based on the information on the return direction flag corresponding to the link of the road on which the vehicle is currently running, just like a guidance in a so-called "turn-by-turn method." The indication of the traveling direction at this time is made based on the return direction flag previously described.

Generally, immediately after the vehicle has deviated from the guidance route due to erroneous driving, or immediately after the driver has intentionally made a temporary deviation from the guidance route, the driver is inevitably instructed to turn back the link based on a recommended course set for the link, as long as the road on which the vehicle is running is not one-way traffic. In such a case, the indication of the return direction displayed immediately after the deviation from the guidance route has the nature of notifying the deviation from the route. However, when the driver is running in the direction reverse to the recommended course and is instructed to turn back at all times, the driver may feel the instruction as offensive particularly when the driver is running on a road on which the driver experiences difficulties in changing the direction for return back.

Therefore, assuming that the vehicle is running in the direction reverse to a recommended coarse, if a node at an end of a link, on which the vehicle is currently running, is connected to another link, a return route may be presented from the end to the link on which the vehicle is currently running as long as the link is not marked with the black circle, as shown in Fig. 12, on the next node to which the link, on which the vehicle is currently running, is connected (i.e., a node at an end of the link on which the vehicle is currently running). Therefore, assuming the vehicle is currently running on a link in a direction reverse to a recommended course, if the vehicle has passed the midpoint of the link, the driver may now be instructed to run in the same direction. Then, when the vehicle approaches within a predetermined distance from the next node, a travelling direction is indicated based on the alternative guidance flag at the next node.

Further, if the in-vehicle terminal device 1 receives the delivery map data 424 appended with the sum vi of link costs at each node calculated in the return route search S7127 together with the return direction flag and alternative guidance flag for each node of the road data, after the vehicle has passed a section divided by an interior division ratio of the link costs at nodes at both ends of the link, the driver may be instructed to run in the same way even if the vehicle is running in a direction reverse to a recommended course on the link on which the vehicle is currently running.

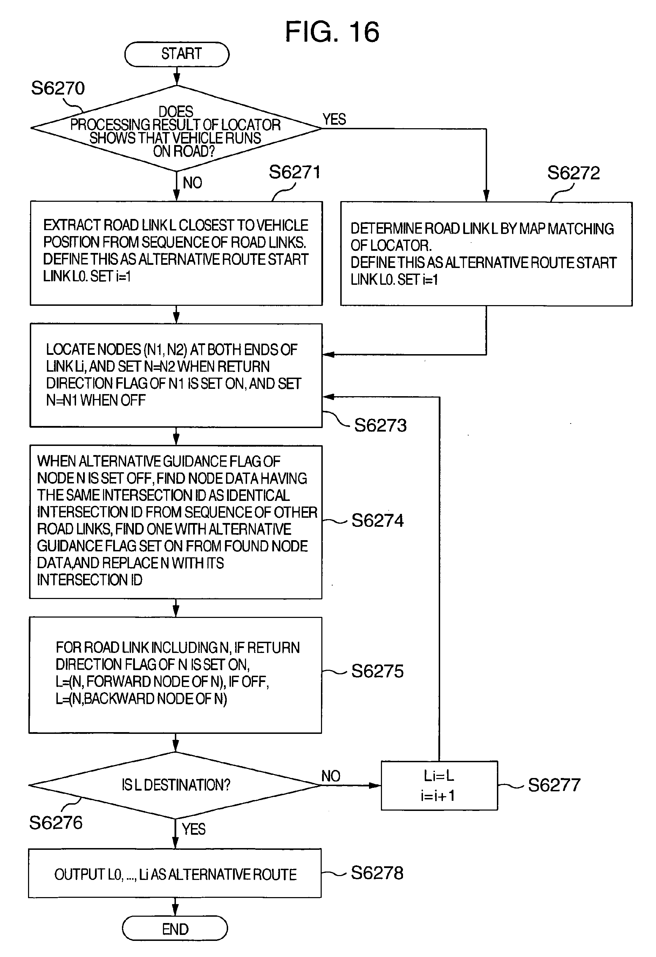

Fig. 16 is a flow chart illustrating a procedure for locating an alternative route in the in-vehicle terminal device 1.

First, it is determined by the locator 622 whether or not the vehicle travels on a road (S6270). As a result, if the vehicle travels on a road (Yes at S6270), a road link L is determined by map matching of the locator 622, this is defined as a starting link L₀ of an alternative route, and the link counter is set to one (i=1) (S6272). On the other hand, if the vehicle does not travel on a road (No at S6270), the load link L closest to the position of the vehicle is extracted from all road link sequence data 4247, this is defined as a starting link L₀ of an alternative route, and the link counter is set to one (i=1) (S6271).

Next, nodes (N1, N2) at both ends of the road link Li are located, and N is set to N2 (N=N2) if the return direction flag of N1 is set on, and N is set to N1 (N=N1) if the return direction flag is set off (S6273). Here, N corresponds to the intersection ID in the node data 4248 in Fig. 7.

Further, when the alternative guidance flag of the node data 4248 of the N is set off, node data 4248 having the same intersection ID as the data described in the identical intersection ID in the node data 4248 is extracted from other road link sequence data 4247. Here, since the same intersection ID is not limited to one, two or more node data may be extracted. Therefore, from the extracted node data 4248, one which has its alternative guidance flag set on is found, and N is replaced with its intersection ID (S6274).

Next, if the return direction flag of the node data 4248 of N is set on for a road link including N, L=(N, Forward Node of N) is set. If the return direction flag is set off, L=(N, Backward Node of N) is set (S6275).

Then, it is checked whether or not L is a destination link, and if it is not a destination link (No at S6276), Lᵢ is set to L (Lᵢ=L), and the link counter is incremented by one (i=i+1) (S6277), and the processing at steps S6273 to S6276 is repeated. On the other hand, if L is the destination link (Yes at S6276), the sequence of so far located links L₀, ..., Lᵢ is outputted as a alternative route (S6278).

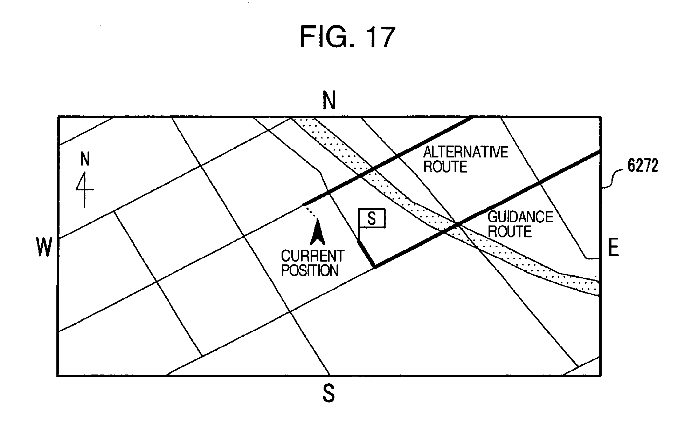

Fig. 17 illustrates an exemplary alternative route displayed on the in-vehicle terminal device 1. In this example, while the alternative route is displayed in the same manner as the original guidance route, actually, the alternative route is displayed in a loud color different from that of the original guidance route, while the original guidance route remains displayed. Alternatively, the original guidance route may be erased, or displayed in a quiet light color.

The timing at which the alternative route is displayed is when the vehicle deviates from the guidance route. In this example, the vehicle is on an alley at the start in Fig. 14, and the start link is determined to be the north-east road link closest to the starting point to display the guidance route to the destination. However, the vehicle cannot go out from the alley to the north-east road link, and has no choice but goes up the alley toward north-west. In this event, as the vehicle approaches the north-west road link, and is determined to be closer to the north-west road link than to the north-east road link, the vehicle is regarded as traveling on the north-west road link. At this time, the vehicle deviates from the guidance route, and the alternative route is displayed.

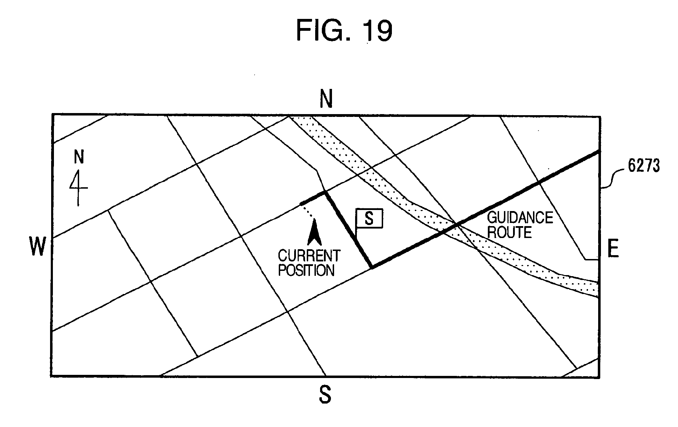

The user of the navigation system may be puzzled if the system automatically changes the guidance route as in Fig. 17. For this reason, it may be convenient to simply display the return direction as illustrated in Fig. 15, such that the user is left to the selection of an actual return route, or it may be convenient to display routes which connect to the original guidance route, as illustrated in Fig. 19, later described. Therefore, the user is allowed to specify the way these routes are displayed. For this purpose, the in-vehicle terminal device 1 is provided with a button exclusively for selecting a display mode. Alternatively, a soft button may be provided on the touch panel display 12, or a display mode may be selected by an audio input through a microphone.

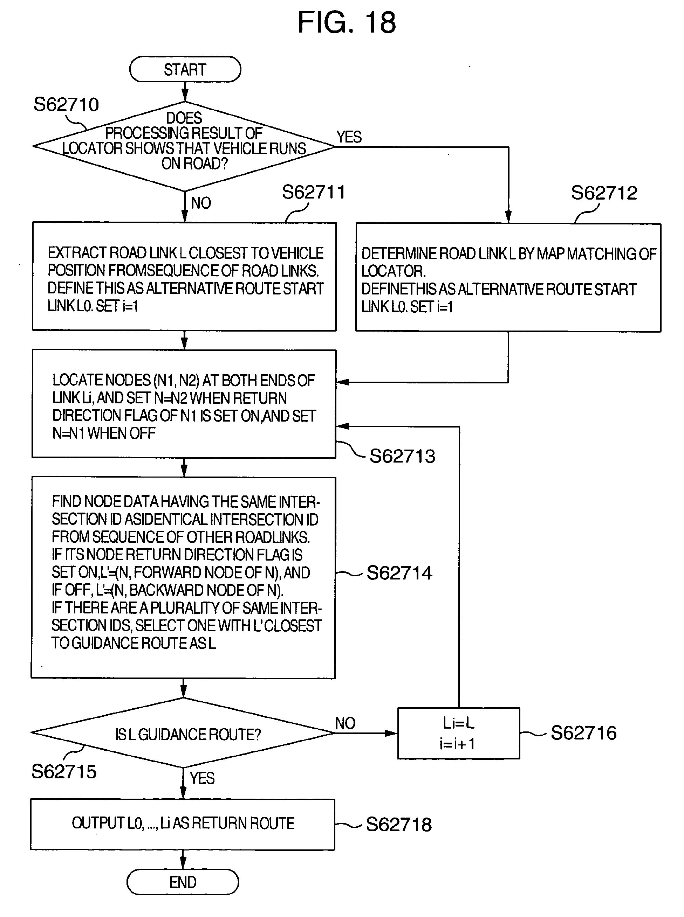

Fig. 18 is a flow chart illustrating a procedure for locating a return route to a guidance route in the in-vehicle terminal device 1. While the procedure for locating a return route to a guidance route in Fig. 18 differs from the procedure for locating an alternative route in Fig. 16 in that the alternative guidance flag is not utilized, but the two flows are the same in the majority. Specifically, in the flow chart illustrated in Fig. 16, links are searched by tracing links which have a node, the alternative route flag of which is set on, whereas in the flow chart illustrated in Fig. 18, links are selected to set a return route which comes closer to the guidance route, to locate links which connect to the original guidance route. First, steps S62710 to S62713 in the pre-processing section are the same as steps S6270 to S6273 in the procedure for locating an alternative route.

As a node N is given by the processing at these steps, node data having the same intersection ID as the identical intersection ID described in its node data is searched and extracted from other road link sequence data 424. Then, if an extracted node has the return direction flag set on, L'=(N, Forward Node of N) is set. On the other hand, if the return direction flag is set off, L'=(N, Backward Node of N) is set. Here, if there are a plurality of the same intersection IDs, a plurality of similar L' can be derived, in which case, the one closest to the guidance route is selected as L (S62714).

Next, it is checked whether or not L is included in the guidance route. If L is not included in the guidance route (No at S62715), Lᵢ is set to L (Lᵢ=L), and the link counter is incremented by one (i=i+1) (S62716), and the processing at steps S62713 to S62715 is repeated. On the other hand, if L is included in the guidance route (Yes at S62715), a sequence of so far located links L₀, ..., Lᵢ are outputted as a return route to the guidance route (S62718).

Fig. 19 illustrates exemplary return route to the guidance route displayed on the in-vehicle terminal device 1. As illustrated, unlike the display of the alternative route in Fig. 17, the return route to the guidance route is displayed, so that the driver is given a sense of security, as compared with the alternative route which can trace a route different from the guidance route even if the driver understands that he will reach the original guidance route or the destination sooner or later.

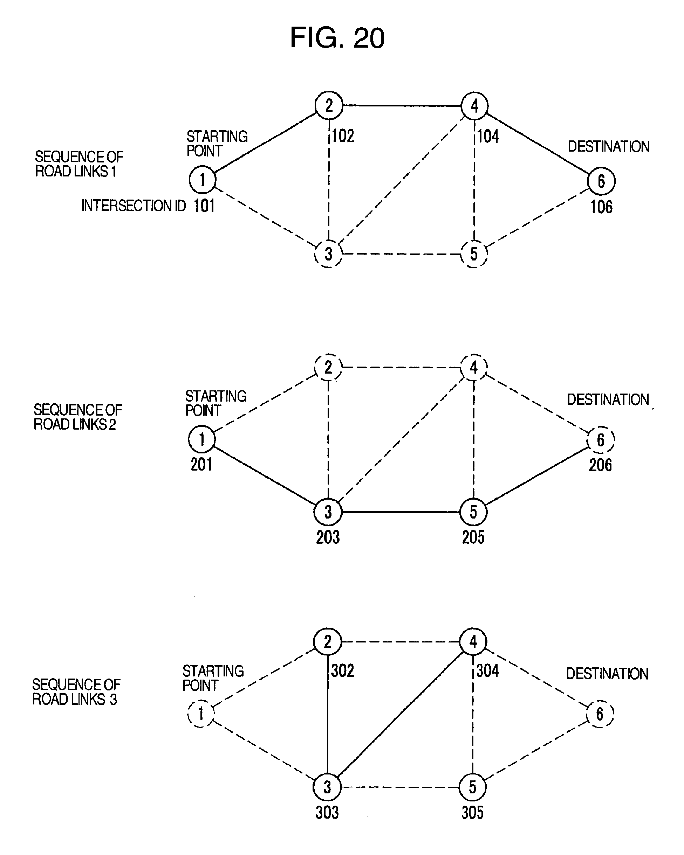

Fig. 20 is a diagram for giving a supplementary explanation on the same intersection ID. In a road network illustrated in Fig. 20, a sequence of road links refers to a sequence of links which connect a sequence of nodes (1, 2, 4, 6); a sequence of links which connect a sequence of nodes (1, 3, 5, 6); and a sequence of links which connect a sequence of nodes (2, 3, 4). In this event, each node is assigned an intersection ID which is assigned separately for each sequence of links. Therefore, in many cases, each node will have a plurality of intersection IDs. In Fig. 20, the intersection IDs are numbers written below the respective nodes, wherein a node 2, for example, has intersection IDs 102, 302. Thus, the node data 4248 in Fig. 7 reserves fields for storing an intersection ID given as the link sequence data, and the same intersection ID as that intersection ID. The number of the same intersection IDs is not always limited to one.

In the embodiment described above, the server device 4 previously creates the direction data 423 to return to the original route based on the shortest path algorithm for each of roads included in an extracted range of a map determined for the first located guidance route, and incorporates the direction data 423 to return to the original route into the delivery map data 424 including the guidance route to the destination in the form of flag data for delivery to the in-vehicle terminal device 1. This direction data 423 to return to the original route enables the in-vehicle terminal device 1 to determine the direction in which the vehicle runs to approach the destination for each of roads included in the extracted range of the map, and to determine a road to be selected at an intersection for approaching the destination. Also, the in-vehicle terminal device 1 can locate by itself an alternative route to the destination or a return route to the original guidance route based on the delivery map data 424 delivered thereto. Therefore, whenever the vehicle deviates from the guidance route, the in-vehicle terminal device 1 can display an alternative route or a return route based on an optimal route without making additional communications with the server device 4.

Also, as a matter of course, if the vehicle repeats deviations and goes out of the range of the delivery map data 424 originally delivered to the in-vehicle terminal device 1, the in-vehicle terminal device 1 communicates with the server device 4 to request for rerouting.

### <Other Embodiments>

While the present invention has been described in connection with an example of preferred embodiment thereof, the present invention is not limited to the foregoing embodiment but can be modified as appropriate without departing from the spirit and scope of the invention.

For example, in the foregoing embodiment, the server device 4 incorporates the direction data 423 to return to the original route into the delivery map data 424 in the form of flag data for delivery to the in-vehicle terminal device 1, but the direction data 423 to return to the original route may be delivered as it is to the in-vehicle terminal device 1. In this event, the set {pᵢ} of shortest route nodes and the return direction matrix (rᵢⱼ) are delivered to the in-vehicle terminal device 1 together with the delivery map data which does not include flag data.

Once the in-vehicle terminal device 1 receives the set {pᵢ} of shortest route nodes and the return direction matrix (rᵢⱼ) delivered the in-vehicle terminal device 1, the in-vehicle terminal device 1 can display a return direction, an alternative route, and a return route to the guidance route, described in connection with Figs. 15 to 19, without problem. For example, the return direction flag illustrated in Fig. 15 can be readily displayed by extracting numbers (intersection IDs) of nodes on both ends of each road link from the road link sequence data 427 of the delivery map data 424, and referencing the return direction matrix (rᵢⱼ) based on the node numbers. Also, for displaying an alternative route as illustrated in Fig. 17, the in-vehicle terminal device 1 can readily locate an alternative route with the set {pᵢ} of shortest route nodes only by locating a node N of a starting link, in a manner similar to the steps S6270 to S6273 shown in the processing flow of Fig. 16. Further, in regard to the process in Fig. 18 for locating a return route connected to the guidance route in Fig. 19, since nodes at both ends of a link have been located at steps S62713 and S62714, the return direction flag of this link can be readily found with the return direction matrix (rᵢⱼ).

It should be further understood by those skilled in the art that although the foregoing description has been made on embodiments of the invention, the invention is not limited thereto and various changes and modifications may be made without departing from the spirit of the invention and the scope of the appended claims.

## Claims

1. A server device (4) for use in a communication-based car navigation system connected to an in-vehicle terminal device (1) through a communication network (3), comprising:
guidance route search means (712) for finding guidance route data from a current position to a destination with reference to a map database (421) based on data on the current position and the destination delivered from said in-vehicle terminal device (1);
map extraction means (713) for extracting map data including navigable roads for a region near said guidance route from said map database (421);
return route search means (714) for finding direction data (423) to return to the original route from each of links in a road network comprised of the extracted navigable roads; and
means (417) for delivering said direction data to return to the original route associated with.said guidance route data and extracted map data to said in-vehicle terminal device (1).

2. A server device (4) for use in a communication-based car navigation system connected to an in-vehicle terminal device (1) through a communication network (3), comprising:
guidance route search means (712) for finding guidance route data from a current position to a destination with reference to a map database (421) based on data on the current position and the destination delivered from said in-vehicle terminal device (1);
map extraction means (713) for extracting map data including navigable roads for a region near said guidance route from said map database (421);
return route search means (714) for finding direction data (423) to return to the original route from each of links in a road network comprised of the extracted navigable roads;
means (715) for converting said guidance route data and extracted map data to delivery map data (424);
flag addition means (712, 714) for converting said direction data to return to the original route to flag data appended to a link sequence data in said delivery map data (424), and adding said converted flag data to said delivery map data (424); and
means (417) for delivering said delivery map data (424) to said in-vehicle terminal device (1).

3. A program (71) for a server device (4) for use in a communication-based car navigation system connected to an in-vehicle terminal device (1) through a communication network (3), said program causing a computer of said server device (4) to function as:
guidance route search means (712) for finding guidance route data from a current position to a destination with reference to a map database (421) based on data on the current position and the destination delivered from said in-vehicle terminal device (1);
map extraction means (713) for extracting map data including navigable roads for a region near said guidance route from said map database (421);
return route search means (714) for finding direction data (423) to return to the original route from each of links in a road network comprised of the extracted navigable roads;
means (417) for delivering said direction data to return to the original route associated with said guidance route data and extracted map data to said in-vehicle terminal device (1).

4. A program (71) for a server device (4) for use in a communication-based car navigation system connected to an in-vehicle terminal device (1) through a communication network (3), said program causing a computer of said server device (4) to function as:
guidance route search means (712) for finding guidance route data from a current position to a destination with reference to a map database (421) based on data on the current position and the destination delivered from said in-vehicle terminal device (1);
map extraction means (713) for extracting map data including navigable roads for a region near said guidance route from said map database (421);
return route search means (714) for finding direction data (423) to return to the original route from each of links in a road network comprised of the extracted navigable roads;
means (715) for converting said guidance route data and extracted map data to delivery map data (424);
flag addition means (712, 714) for converting said direction data to return to the original route to flag data appended to a link sequence data in said delivery map data (424), and adding said converted flag data to said delivery map data (424); and
means (417) for delivering said delivery map data (424) to said in-vehicle terminal device (1).

5. An in-vehicle terminal device (1) for use in a communication-based car navigation system connected to the server device (4) according to claim 1 through a communication network (3), said in-vehicle terminal device (1) comprising:
guidance route display means (625) for displaying a map including a guidance route and surroundings thereof;
locator means (622) for locating a current position of a vehicle based on input data from a vehicle position sensor including GPS (13), and determining whether or not the current position deviates from said guidance route; and
return route display means (626) operative when said locator means (622) determines that the current position of said vehicle deviates from said guidance route for locating a return route based on said direction data to return to the original route previously delivered from said server device (4), and displaying said return route in the map including said guidance route and surroundings thereof.

6. An in-vehicle terminal device (1) for use in a communication-based car navigation system connected to the server device (4) according to claim 2 through a communication network (3), said in-vehicle terminal device (1) comprising:
guidance route display means (625) for displaying a map including a guidance route and surroundings thereof;
locator means (622) for locating a current position of a vehicle based on input data from a vehicle position sensor including GPS (13), and determining whether or not the current position deviates from said guidance route; and
return route display means (626) operative when said locator means (622) determines that the current position of said vehicle deviates from said guidance route for locating a return route based on flag data included in said delivery map data (424) previously delivered from said server device (4), and displaying said return route in a map including said guidance route and
surroundings thereof.

7. An in-vehicle terminal device for use in a communication-based navigation system according to claim 5 or 6, further comprising:
alternative route display means (627) for erasing said displayed guidance route, and displaying an alternative route which is an optimal route from the current position of said vehicle to the destination within said return route.

8. A program (62) for an in-vehicle terminal device (1) for use in a communication-based car navigation system connected to the server device (4) according to claim 1 through a communication network (3), said program causing a computer of said in-vehicle terminal device (1) to function as:
guidance route display means (625) for displaying a map including a guidance route and surroundings thereof;
locator means (622) for locating a current position of a vehicle based on input data from a vehicle position sensor including GPS (13), and determining whether or not the current position deviates from said guidance route; and
return route display means (626) operative when said locator means (622) determines that the current position of said vehicle deviates from said guidance route for locating a return route based on said direction data to return to the original route previously delivered from said server device (4), and displaying said return route in a map including said guidance route and surroundings thereof.

9. A program (62) for an in-vehicle terminal device (1) for use in a communication-based car navigation system connected to the server device (4) according to claim 2 through a communication network (3), said program causing a computer of said in-vehicle terminal device (1) to function as:
guidance route display means (625) for displaying a map including a guidance route and surroundings thereof;
locator means (622) for locating a current position of a vehicle based on input data from a vehicle position sensor including GPS (13), and determining whether or not the current position deviates from said guidance route; and
return route display means (626) operative when said locator means (622) determines that the current position of said vehicle deviates from said guidance route for locating a return route based on flag data included in said delivery map data (424) previously delivered from said server device (4), and displaying said return route in a map including said guidance route and surroundings thereof.

10. A program for an in-vehicle terminal device for use in a communication-based car navigation system according to claim 8 or 9, said program further causing the processor of said in-vehicle terminal (1) to function as:
alternative route display means (627) for erasing said displayed guidance route, and displaying an alternative route which is an optimal route from the current position of said vehicle to the destination within said return route.

11. A method for operating a server device (4) for use in a communication-based car navigation system connected to an in-vehicle terminal device (1) through a communication network (3), said method comprising the steps of:
guidance route search step for finding guidance route data from a current position to a destination with reference to a map database (421) based on data on the current position and the destination delivered from said in-vehicle terminal device (1);
map extraction step for extracting map data including navigable roads for a region near said guidance route from said map database (421);
return route search step for finding direction data (423) to return to the original route from each of links in a road network comprised of the extracted navigable roads; and
step for delivering said direction data to return to the original route associated with said guidance route data and extracted map data to said in-vehicle terminal device (1).

12. A method for operating a server device (4) for use in a communication-based car navigation system connected to an in-vehicle terminal device (1) through a communication network (3), said method comprising the steps of:
guidance route search step for finding guidance route data from a current position to a destination with reference to a map database (421) based on data on the current position and the destination delivered from said in-vehicle terminal device (1);
map extraction step for extracting map data including navigable roads for a region near said guidance route from said map database (421);
return route search step for finding direction data (423) to return to the original route from each of links in a road network comprised of the extracted navigable roads;
step for converting said guidance route data and extracted amp data to delivery map data (424);
flag addition step for converting said direction data to return to the original route to flag data appended to a link sequence data in said delivery map data (424), and adding said converted flag data to said delivery map data (424); and
step for delivering said delivery map data (424) to said in-vehicle terminal device (1).

13. A method for operating an in-vehicle terminal device (1) for use in a communication-based car navigation system connected to the server device (4) according to claim 1 through a communication network (3), said method comprising the steps of:
guidance route display step for displaying a map including a guidance route and surroundings thereof;
locator step for locating a current position of a vehicle based on input data from a vehicle position sensor including GPS (13), and determining whether or not the current position deviates from said guidance route; and
return route display step operative when said locator means (622) determines that the current position of said vehicle deviated from said guidance route for locating a return route based on said direction data to return to the original route previously delivered from said server device (4), and displaying said return route in a map including said guidance route and surroundings thereof.

14. A method for operating an in-vehicle terminal device (1) for use in a communication-based car navigation system connected to the server device (4) according to claim 2 through a communication network (3), said method comprising the steps of:
guidance route display step for displaying a map including a guidance route and surroundings thereof;
locator step for locating a current position of a vehicle based on input data from a vehicle position sensor including GPS (13), and determining whether or not the current position deviates from said guidance route; and
return route display step operative when said locator means (622) determines that the current position of said vehicle deviates from said guidance route for locating a return route based on flag data included in said delivery map data (424) previoiusly delivered from said server device (4), and displaying said return route in a map including said guidance route and surroundings thereof.
